# EUROPEAN PATENT SPECIFICATION

(11) **EP 2 174 836 B1**
(45) Date of publication and mention of the grant of the patent: **04.01.2012**
(21) Application number: 09380159.5
(22) Date of filing: 07.10.2009
(51) Int. Cl.: B60R 9/058, F16B 5/02

(54) **Anchor for mounting vehicle roof racks**
Anker zur Montage von Fahrzeugdachgepäckträgern
Ancrage pour monter des galeries de toit de véhicule

(30) Priority: 07.10.2008 ES 200802028 U; 01.07.2009 ES 200930232 U
(43) Date of publication of application: 14.04.2010
(73) Proprietor: Seat, S.A., 08760 Martorell, Barcelona (ES)
(72) Inventor: Carrascosa Rodriguez, Alberto, 08760 Martorell, Barcelona (ES)
(74) Representative: Carvajal y Urquijo, Isabel

(56) References cited:
- DE-A1- 3 932 193
- DE-C1- 3 620 005
- DE-U1-202004 018 079

## Description

### Technical field

The present invention refers to an anchor for mounting racks on vehicle roofs, comprising a fixing screw to be fixed on the roof and an allowance compensator with which a safe mounting of said rack is attained.

### Background of the invention

The mounting of the rack on vehicle roofs requires reinforcing roof flanks, in order to support the weight of the objects placed on the rack.

These reinforcements often consist of at least one beam along each roof flank, under the sheet thereof, and which will serve as support for the rack.

For mounting the racks on vehicle roofs with at least one reinforcement beam on each flank, there are known anchors comprising a fixing screw and an allowance compensator. The fixing screw in inserted through opposing holes of the longitudinal bars of the rack, of the roof sheet and of the reinforcement beam, and rests outwardly and is tightened against the rack bar and the reinforcement beam. The allowance compensator is placed between the roof sheet and the reinforcement beam thereof, resting and being tightened against said components.

The purpose of the allowance compensator is to maintain a constant relief in the rack support on the roof sheet and absorb dimensional allowances generating by the mounting between the roof sheet and the reinforcement beam thereof, and to enable a controlled transmission of the tightening torque between the different components: rack, roof sheet and reinforcement beam. An anchor with this constitution is described in the utility model 200800910 of the same applicants.

The problem of the anchor with the constitution described is that its mounting on the vehicle roof has to be carried out in the vehicle assembly line. To that end, the operator with the appropriate tool, once the reinforcement beam has been mounted, assembles the compensator from the vehicle interior, with the space problems that this entails and fundamentally with risks of lack of precision in the mounting, specifically in the datum line, which is the one that guarantees the correct support of the rack to the roof. All the above considerations generate extra work in the assembly line to attain the correct coupling of the compensator.

DE 3932193 discloses a fixing device. The fixing device secures a luggage rack, particularly a railing, to a vehicle roof, having a support foot with a tapped bush inserted in the roof frame. An adjusting bush screws into the tapped one and bears at the inner end against the roof skin, being engaged by a bolt passing through a drilling in the skin and pressing it against the latter. The adjusting bush engages via an external left-handed threads in the tapped bush, and a right-handed internal one engaged by the bolt. It also has an external radial end flange with an oblique slot extending in the direction of the left-handed thread. The slot width is slightly greater than the thickness of the roof skin. The adjusting bush can be screwed into the tapped one from the outside, while bearing against the skin on the inside.

DE 20 2004 018 079 discloses a roof support system. The roof support system has a roof strip with a contact bearing surface which matches the body contour, extends over the length of the roof strip and can be placed substantially over the vehicle body. The contact bearing face can be configured so that at least the outer edge of the strip assigned to the vehicle body forms a gap. Independent claim describes vehicle where vehicle body has on each side wall frame a grooved indentation to hold a roof strip.

### Detailed description of the invention

The object of the present invention is an anchor to mount racks on vehicle roofs, constituted in such a way as to eliminate the aforementioned problems, since it does not require mounting operations in the vehicle interior, and all of this is attained because part of the allowance compensator components form part of the reinforcement beam, being mounted thereon by the provider of said beam, constituting an assembly with it that, once it is at the beginning of the assembly line, it will be traditionally coupled and fixed to the vehicle roof.

The anchor of the invention also enables to compensate the mounting allowances between the roof sheet and the reinforcement beam, maintain a constant relief, generate a rigid system, generate a tightening torque transmission in a controlled manner to the different elements and eliminate the mounting of the allowance compensator in the assembly line.

The anchor of the invention is of the type constituted by a fixing screw and an allowance compensator. The screw in inserted through opposing holes of the rack bars, of the vehicle roof sheet and of the reinforcement beam thereof, and rests outwardly on the rack bar and reinforcement beam and is tightened against them. The allowance compensator is placed between the roof and the reinforcement beam, being inwardly tightened against said components.

According to an embodiment, the allowance compensator comprises a lower nut, an upper bushing and a cage retainer of the nut on the reinforcement beam.

The lower nut is placed on the reinforcement beam, coinciding with each one of the holes for inserting a fixing screw.

The nut cage retainer is upwardly fixed to the reinforcement beam, fore example by welding, bracing the nut, so that it prevents it from accidentally coming out, during transport and reinforcement beam mounting operations, preventing also the turning around itself. This nut will have an external polygonal contour, for example a square contour.

The upper bushing is exteriorly threaded in the nut and has an external upper stop for an upward support against the vehicle roof.

The allowance compensator also includes a plastic material washer which is placed on the nut, between said nut and the cage retainer. To that end, the nut can have in its upper part, around the central hole for inserting the fixing screw, a peripheral recess in which the plastic material washer is housed, being said recess less deep than the washer thickness, so that when the assembly is mounted, the cage rests on the plastic material washer and not on the nut.

The nut retention by means of the aforementioned cage allows adjustment movements according to the X and Y axes, while when the upper bushing is screwed and unscrewed, so as to correct allowances, regulation is attained in the Z axis direction.

The plastic material washer fulfills two functions, working as a dielectric element, and as a positioning element between the nut and the metallic cage.

According to another embodiment, the allowance compensator does not have a lower nut cage retainer on the beam, being the retention of said nut carried out by means of a support clamp which also serves to facilitate the mounting of the allowance compensator. This clamp is constituted so as to help centering the allowance compensator, in relation to the reinforcement beam holes, and at the same time to avoid contact between said beam and the allowance compensator, to prevent both elements to be joined when painted, thus avoiding the later corrosion of the vehicle, as the two components are separated. The use of the support clamp enables to suppress from the compensator the lower nut cage retainer and the plastic material washer placed on said nut.

This support clamp is constituted by a plastic material plate featuring, from one of its edges, a notch with the appropriate dimensions to enable the allowance compensator to pass through it, while from the opposite edge, said plate extends into a pull-tab, which will serve as a lever or action means to facilitate the mounting and dismounting of the clamp in the reinforcement beam, in a position transversal to it.

The plate constituting the clamp of the invention comprises means for its positioning and anchorage to the reinforcement beams, in transversal position and under them, with the notch coinciding with the contour of one of the reinforcement beam holes. The plate also has means to fasten and center the allowance compensator with respect to reinforcement beam hole, so that it is separated from said beam.

As regards the pull-tab, it forms a more than 180°-angle with the upper surface of the plate, to act as an action lever in the clamp mounting and dismounting phase on the beam. This tab has transversal ribs on its outer surface which will facilitate its gripping and handling during the clamp mounting and dismounting phases.

The notch of the plate forming the clamp has a circular contour, its diameter being slightly larger than the outer contour of the allowance compensator, and ending through a passage of a smaller width than the diameter of said circular contour. From the circular contour of the notch there protrude radial teeth having certain downward inclination and delimiting a smaller circular contour than the external one of the allowance compensator, determining the centering means and the fastening means of said compensator.

The plate forming the clamp is also provided, from its free longitudinal edges and in a position adjacent to the pull-tab, with aligned lateral notches.

The positioning and anchoring means of the plate to the reinforcement beam consist of two bended pins, which perpendicularly protrude from the plate between the lateral notches and the root or beginning of the aforementioned pull-tabs, and in a series of straight pins perpendicularly protruding also from the plate, on the same side as the bended pins, in a position adjacent to the circular edge of the plate notch. The straight pins delimit an outer contour which has an approximately equal diameter to that of the reinforcement beam holes. The bended pins have a section parallel to the plate, which is guided towards a direction opposite to the pull-tab. These bended pins can be Z-shaped, with end sections perpendicular to the plate and with the intermediate section parallel thereto, and approximately the same height as the thickness of the reinforcement beam. In turn, the straight pins will have a larger height than the thickness of the reinforcement beam and will end in an outer flange or flaring protruding on said bar.

From the plate upper surface, there also protrude, around the circular contour of the notch, a series of pivots serving as separating elements, for supporting the reinforcement beam.

The plate also has, from the bottom of the notch, two through cutting lines, directed towards the pull-tab, which facilitate the bending of the plate with respect to the straight pins.

Finally, from the reinforcement beam there protrude, in a longitudinal direction and at both sides of the rack anchoring holes, wings serving as stops for the cage and nut of the allowance compensator.

### Brief description of the drawings

The attached drawings show, as a non-limiting example, a possible embodiment of the anchor of the invention, where:
Figure 1 shows an upper plan view of a vehicle, showing the roof flanks, along which the reinforcement beams are placed.
Figure 2 is a partial cross-sectional view of the automobile roof, with a roof rack, coinciding with one of the anchors of said rack.
Figure 3 is a perspective exploded view showing the mounting of the allowance compensator of the invention onto one of the reinforcement beams of the roof.
Figures 4 and 5 are sections similar to that of figure 2, showing the mounting of the allowance compensator on the vehicle roof, together with a reinforcement beam.
Figure 6 is a similar view to that of figure 2, showing an embodiment variant.
Figure 7 is a perspective view of a support clamp, to facilitate the mounting of the allowance compensator of figure 6.
Figure 8 is a perspective exploded view of a reinforcement beam, allowance compensator nuts and support clamp for the mounting thereof.
Figure 9 is a partial perspective view of the mounting of a support clamp on a reinforcement beam, coinciding with one of the holes of said beam.
Figures 10a, 10b, 10c and 10d represent the mounting sequence of the support clamp of the invention on a reinforcement beam, according to sections taken according to the IV-IV line of figure 3.
Figure 11 is a similar view to figure 9, with the allowance compensator already mounted.
Figures 12a, 12b, and 12c show the mounting sequence of the allowance compensator, in sections taken according to the XII-XII cutting line of figure 11.
Figure 13 shows a partial longitudinal sectional view of the reinforcement beam with an allowance compensator, taken according to the XII-XII cutting line of figure 11.
Figures 14a, 14b, 14c and 14d show the dismounting sequence of the support clamp and later fastening of the rack, through one of its beams.

### Detailed description of an embodiment

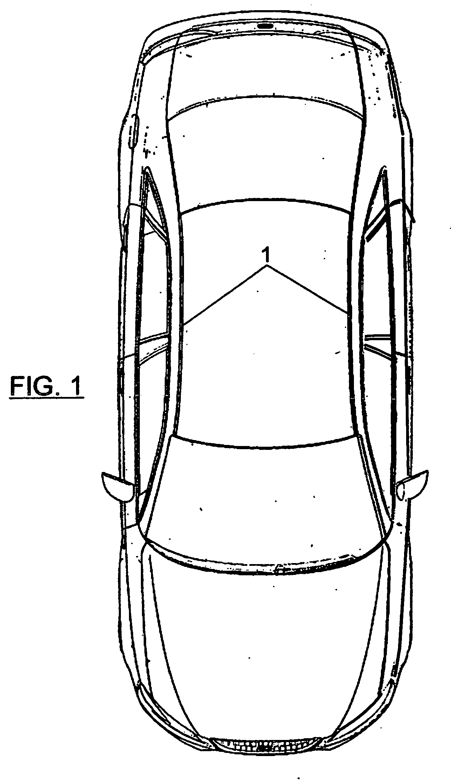

Figure 1 shows a plan view of a vehicle, in which roof, along its flanks 1, the reinforcement beams are placed.

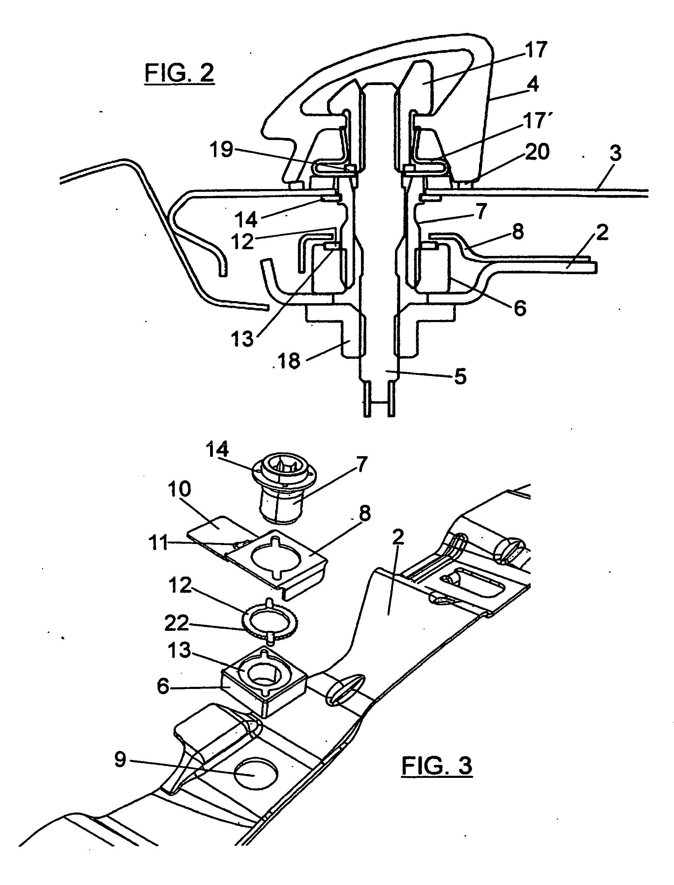

In figure 2, reference 2 indicates the reinforcement beam along the vehicle roof sheet 3. Reference 4 indicates one of the rack bars.

The anchor for bars 4 of the rack includes a fixing screw 5 and an allowance compensator comprising a lower nut 6, an upper bushing 7 and a metallic cage 8, serving as a fastening means for the nut 6 in the reinforcement beam 2.
As it can be better seen in figure 3, the nut 6, having a square contour, is arranged in a position coinciding with each one of the reinforcement beam 2 holes 9, to which a hole of the vehicle roof sheet 3 and a hole of the rack bar 4 will be facing. The nut 6 is mounted on the reinforcement bar 2 through the metallic cage 8, for example a sheet metal cage, which can have a lateral flange 10 fixed to the reinforcement beam 2 by a welding point 11.

Between the cage 5 and the nut 6 there is a plastic material washer 12. To that end, the nut can have on its upper base, around the hole for inserting the screw 5, an annular recess 13 on which the washer 12 is coupled, as it can be seen in figure 2, being the depth of the recess 13 smaller than the thickness of the washer 12, in order to guarantee the cage 8 support on the nut 6 through the plastic material washer 12.

The upper bushing 7 is outwardly threaded to be screwed on the nut 6, as shown in figure 2. The bushing 7 will have an upper annular stop 14, which will serve as an upward support means against the vehicle roof sheet 3, as shown in figure 2.

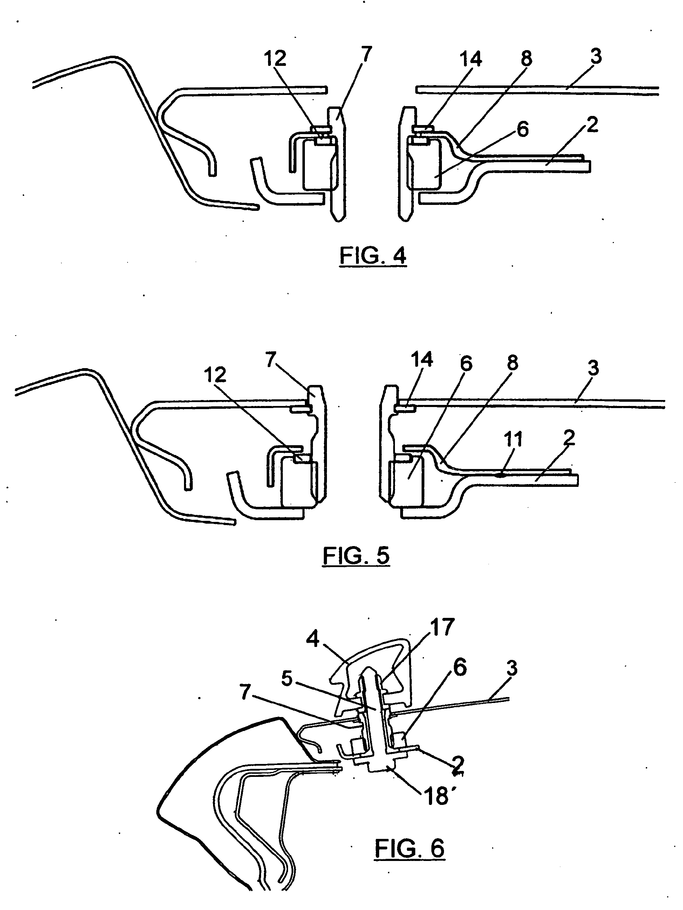

With the arrangement described, the allowance compensator, comprising the nut 6, the upper bushing 7 and the cage 8 are part of the reinforcement beam 2, being it possible to provide them together with said beam. The mounting of the reinforcement beam 2 on the vehicle roof will be carried out traditionally, as shown in figure 4, incorporating the allowance compensator. Once this reinforcement beam is mounted, the upper bushing is rotated until the ring 14 upwardly rests against the roof sheet 3, being the ring fixed in said bushing, near the upper edge thereof, for example in a peripheral throat 16 made on said bushing. In this way, the allowance compensator is pressed in its upper part against the roof sheet 3 and in its lower part against the reinforcement beam 2.

In order to mount the rack, as shown in figure 2, the bars 4 of said rack are placed and fixed by means of an upper nut 17 and a lower nut 22 downwardly pressing the bar 4 against the roof sheet 3, and upwardly pressing the reinforcement beam 2 against the allowance compensator.

The mounting of the rack bars 4 can include a clip 17' and washers 19 and 20, where washers 14, 19 and 20 can also be made of a plastic material, like washer 12.
In this way, the washer 12 fulfills two functions:
- On the one hand, it works as a dielectric element. Work as a dielectric element between the upper bushing and the metallic cage 8, together with the upper washer 14. With this assembly it is possible to electrically isolate the compensator element, so that the cataphoresis treatment does not adhere on the thread, preventing it from being stopped.
- On the other hand, it functions as a positioning element between the nut 6 and the metallic cage 8, positioning the compensator element in such a way that it avoids contact with the surrounding parts. As it can be better seen in figure 3, the washer 12 has a toothing 22 which is deformed when inserted in the metallic nut 6.

The whole compensator assembly could undergo the cataphoresis and painting process, without affecting its mechanical and functional properties. With this technique for fixing the assembly described, the time required for mounting and screwing the rack supports is eliminated, as well as the compensator mounting.

Each one of the rack bars 4 is mounted on the roof by means of four allowance compensators, coinciding with the holes for inserting the corresponding fixing screws 5.

Figure 6, which is a similar view to figure 2, shows an allowance compensator which does not have the cage 8 and the plastic material washer 12, being the fixing screw 5 provided at its lower end with a head 18' substituting the nut 18 of figure 2.

In the embodiment of figure 6 the upper nut 17 is configured in such a way that the clip 17' of figure 2 can be suppressed.

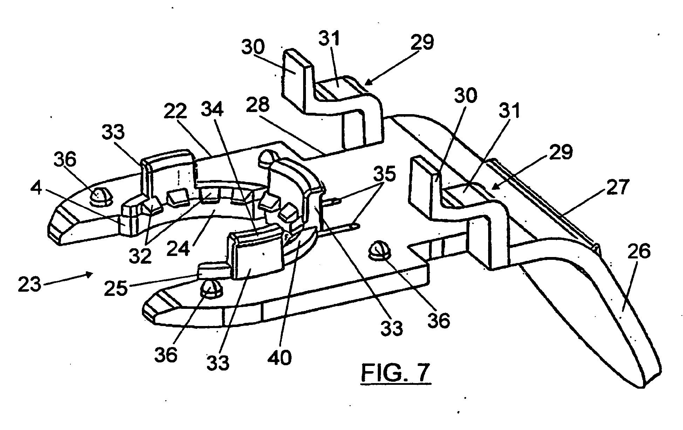

The lower nut 6 retention means consist of a support clamp, shown in perspective in figure 7, which also serves for mounting the allowance compensator shown in figure 6. This clamp is constituted by a plastic material plate 22, with an approximately rectangular contour, featuring from one of its edges a notch 23, including a circular contour 2, which will have a slightly greater diameter than the allowance compensator end, and a slightly throttled outlet 25, with a slightly smaller diameter than the allowance compensator end. From the opposite edge of the plate 22, there protrudes a pull-tab 26 which forms with the upper surface of the plate an angle higher than 180° and which has on its outer surface transversal ribs 27 to facilitate the operation on said tab.

From its longitudinal edges, the plate 22 has opposite notches 28, and between said notches and the tab 26 there protrude, above the plate, two bended pins 29, preferably Z-shaped pins, with end sections 30 which are perpendicular to the plate 32 and an intermediate section 31 which is parallel to said plate and is separated from it by a distance which is approximately equal to the reinforcement beam thickness.

From the circular contour 24 of the notch 23 there radially protrude teeth 32, having a slight downward inclination, which delimit a smaller circular contour than the external one of the allowance compensator, and which will serve as centering and fastening means of said compensator.

In a position adjacent to the circular contour 24 there upwardly protrude from the plate 22 straight pins 33 which have a greater height than the reinforcement beam thickness, in which the clamp is to be mounted. Said pins end in its upper part in an outer flange or flaring 34 which will be located over the reinforcement beam.

From the circular contour 24 of the notch 23 there stem longitudinally, towards the pull-tab 26, two through cutting lines 35 which will grant flexibility to the plate 22.

Finally, from the upper surface of the plate there protrude separating pivots 36, around the notch 23, against which the reinforcement beam will rest.

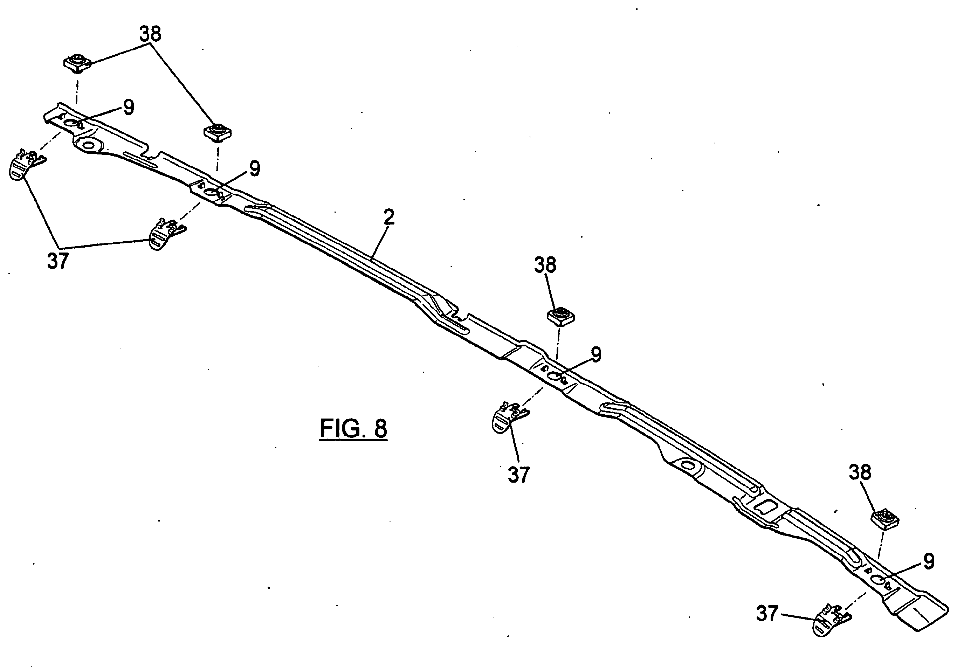

Figure 8 shows a reinforcement beam including, in the same way as figure 3, holes 9, and coinciding with each one of them there will be mounted a support clamp, indicated with reference 37, and an allowance compensator, indicated with reference 38.

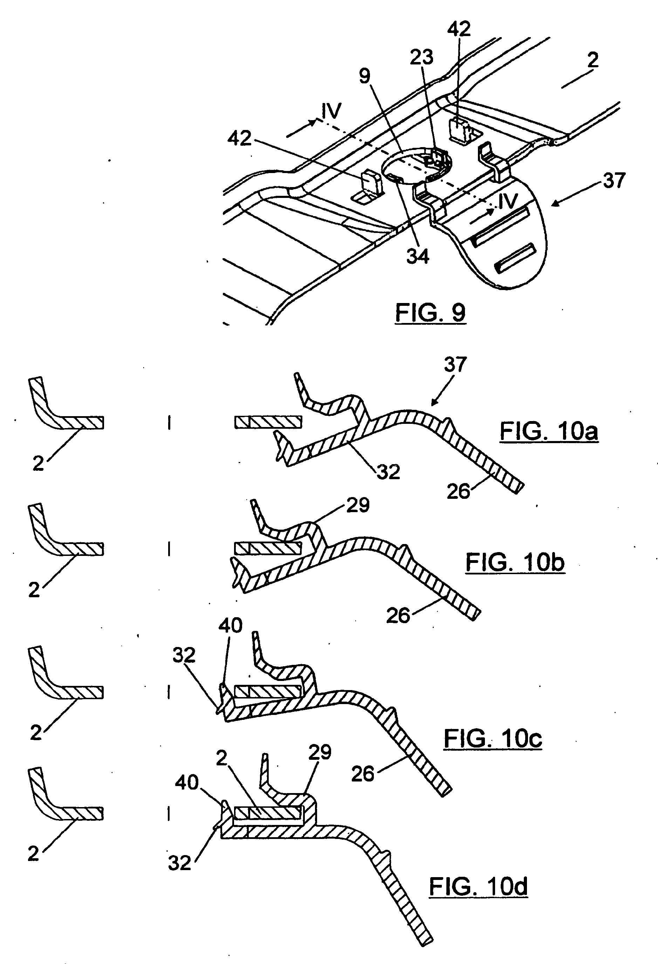

As it can be seen in figure 9, the support clamp 37 is mounted in a transversal position on the reinforcement beam 2, so that the bended pins 29 of the support clamp encircle the beam through one of its longitudinal edges, partially protruding through the corresponding hole 9 the straight pins 23, resting the rear flange 34 against said beam. The circular contour 24 of the notch 23 is located in a position coinciding with the reinforcement beam hole 9 contour.
The mounting of the support clamp 7 on the beam 2 is carried out as shown in figures 10a to 10d, progressively inserting the plate 22 under the beam 2, with deformation of the bended pins 29, until the corresponding section of the beam 2 is braced between the bended pins 29, the straight pins 33 and the flange 40 around the edge 24, between the straight pins 33 and from which there protrude teeth 32, as shown in figure 10d. The necessary deformation of the plate 22 and pins 29 is attained by means of action on the pull-tab 26.

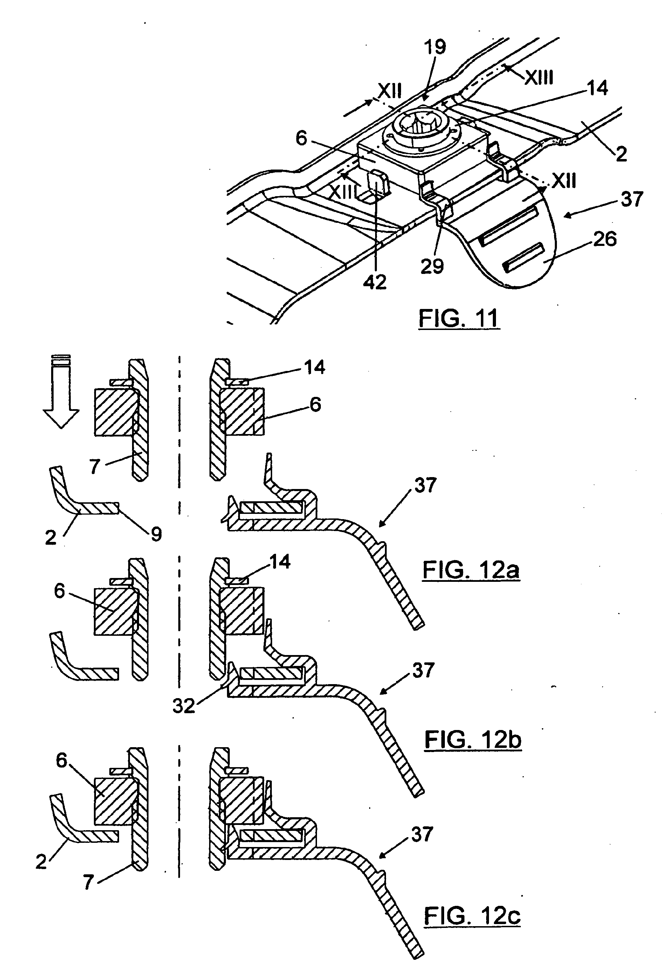

Once the support clamp is coupled on the beam 2, with the circular contour 24 of the notch 23 coinciding with the holes 9 of the beam, the allowance compensator 38 is mounted as shown in figure 11, following the sequences represented in figures 10 a to 10c, facing the threaded bushing 7 of the allowance compensator to the hole 9 of the reinforcement beam 2 and upwardly displacing thereafter said bushing until it goes through the circular contour 24 of the notch 23, tightened between the teeth 32, which retain it, preventing its accidental exit. In this position, the nut 6 of the allowance compensator will rest against the flange 36, figure 7, of the plate 22, preventing it from resting directly on its surface.

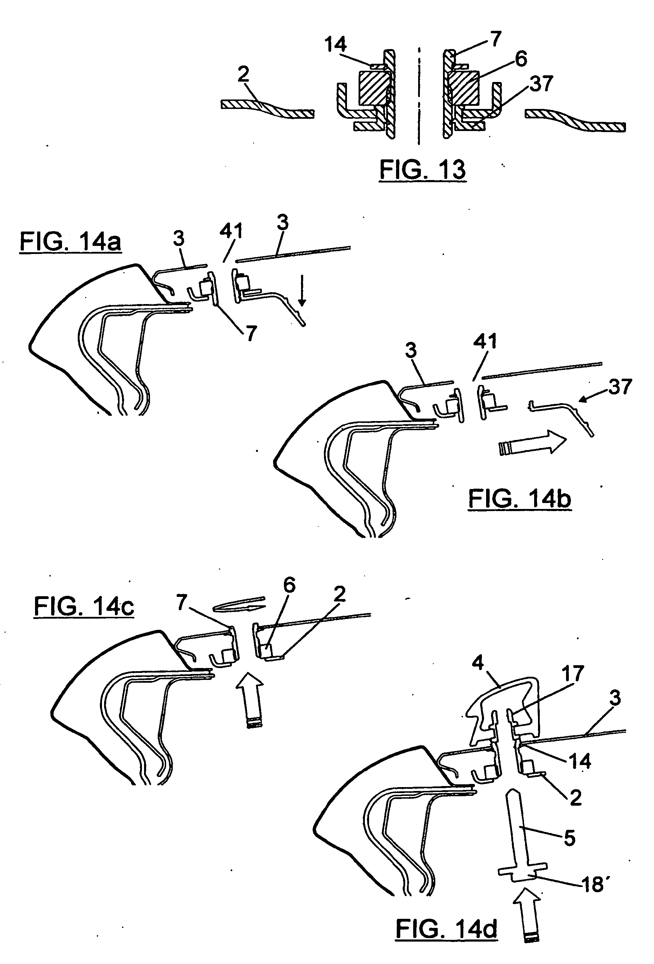

Figure 13 shows how the teeth 32 retain the bushing 7 of the allowance compensator, with the nut 6 separated from the reinforcement beam 2 surface.

Finally, the reinforcement beam 2 is mounted, along the vehicle roof flanks, under the roof sheet 3, coinciding with the hole 41 thereof. Next, the support clamp 37 is dismounted, following an inverse sequence to the one described with reference to figures 10a to 10d, then lifting the bushing 7 of the allowance compensator, through the rotation thereof with respect to the nut 6, as indicated by arrows in figure 14c. Next, the rack is placed, in such a way that the beam 4 holes thereof face the bushing 7 of the allowance compensator, to insert after that, from the vehicle interior, the nut 5 which is screwed to the integral nut 17 of the rack beams 4, being the nut 6 pressed downwards against the reinforcement beam 2 and upwards, through the plastic material washer 14, against the vehicle roof 3, all of which as is represented in figure 6.

With the support clamp described, it is guaranteed the correct positioning and retention of the allowance compensator, through its bushing 7, as shown in figures 12a to 12 c and 13, while maintaining at the same time the nut 6 of the allowance compensator separated from the reinforcement beam 2 surface, allowing the painting to penetrate between the components, during the reinforcement beam painting phase.

In the support clamp, the teeth 32 constitute the positioning and fastening means of the allowance compensator, while the bended pins 29 and the straight pins 33 are positioning and anchoring means of the clamp to the reinforcement beams. The pivots 36 serve as separation elements between the allowance compensator nut and the reinforcement beam.

As it can be seen in figures 9 and 11, the reinforcement beam 2 has, in longitudinal alignment and at both sides of each hole 9, two wings 42 that prevent the rotation of the nut 6 of the allowance compensator.

## Claims

1. Anchor for mounting racks on vehicle roofs, comprising a fixing screw (5) and an allowance compensator, said screw which goes through opposite holes of the rack bars (4), of the vehicle roof sheet (3) and of a reinforcement beam (2) of said roof, with external tightening supports on the corresponding rack bar and reinforcement beam, and whose allowance compensator is placed between the roof sheet and reinforcement beam, with internal tightening supports on them, the aforementioned allowance compensator comprises a lower nut (6) arranged on the reinforcement beam (2), coinciding with each hole (9) for inserting the fixing screw (5); an upper bushing (7) screwed inside the nut (6) and with an upper external stop (14) for upward support, against the vehicle roof (3); and retention means of said lower nut in the reinforcement beam; **characterized in that** the retention means of the lower nut (6) in the reinforcement beam consist of a cage retainer (8) which is fixed by its upper part to the reinforcement beam and encircles said nut.

2. Anchor according to claim 1, **characterized in that** it also comprises a plastic material washer (12) placed on the nut, between said nut and the cage retainer.

3. Anchor according to claim 2, **characterized in that** the nut (6) has in its upper part, around the hole for inserting the fixing screw (5), a peripheral recess (13) in which the plastic material washer is housed, having said recess a smaller depth than the washer thickness.

4. Anchor according to claim 1, **characterized in that** the retention means of the lower nut (6) in the reinforcement beam (2) consist of a clamp (37) which is mounted on said beam, coinciding with each one of the reinforcement beam holes (9) of the vehicle roof flanks, clamp which is constituted by a plastic material plate presenting, from one of its edges, a notch (23) with the appropriate dimensions to enable the allowance compensator to pass through it, while from the opposite edge, said plate extends into a pull-tab (26), said plate which has positioning and anchoring means to the reinforcement beam, in a transversal position and under them, with the notch coinciding with the contour of one of the reinforcement beam holes, and means to fasten and center the allowance compensator with respect to reinforcement beam hole, so that it is separated from said beam.

5. Anchor according to claim 4, **characterized in that** the aforementioned notch (23) has a bottom with a circular contour (24), with a slightly greater diameter than the allowance compensator end, and an outlet (25) whose width is smaller than the diameter of said circular contour, radially protruding from the outlet bottom radial teeth (32), having a slight downward inclination, which delimit a smaller circular contour than the external one of the allowance compensator, and which will serve as positioning and fastening means of said compensator.

6. Anchor according to claim 4, **characterized in that** the aforementioned plate has an approximately rectangular contour, ending the aforementioned notch (23) through one of the smaller edges of said plate, while from the opposite smallest edge there protrudes a pull-tab (26), having the plate, from its longitudinal edges and in a position adjacent to the pull-tab, transversally aligned lateral notches (28).

7. Anchor according to claim 4, **characterized in that** the positioning and anchoring means of the plate to the reinforcement beam consist of two bended pins (29), which perpendicularly protrude from the plate, between the lateral notches (28) and the root or beginning of the aforementioned pull-tab, and in a series of straight pins (33) perpendicularly protruding from the plate, on the same side as the bended pins, in a position adjacent to the circular edge of the aforementioned notch, and which delimit an outer contour which has an approximately equal diameter to that of the reinforcement beam holes (9); said bended pins which have a section (31) parallel to the plate, which is guided towards a direction opposite to the pull-tab.

8. Anchor according to claim 7, **characterized in that** the bended pins (29) have a Z-shaped contour, with end sections (30) perpendicular to the plate, an intermediate section (31) parallel to said plate, and an internal section which has approximately the same height as the thickness of the reinforcement beam (2).

9. Anchor according to claim 7, **characterized in that** the straight pins (33) have a greater height than the thickness of the reinforcement beam and will end In an outer flange or flaring (34) protruding over said reinforcement beam.

10. Anchor according to claim 4, **characterized in that** from the upper surface of the plate there protrude, around the notch, a series of separating pivots (36), for the support of the reinforcement beam.

11. Anchor according to claim 4, **characterized in that** the plate is provided, from the bottom of the notch, with two through cutting lines (35), directed to the pull-tab.

12. Anchor according to claims 4 or 6, **characterized in that** the pull-tab (26) forms an angle higher than 180° with the upper surface of the plate.

## Patentansprüche

1. Verankerung zur Montage von Ablagen auf Fahrzeugdächern, umfassend eine Befestigungsschraube (5) und einen Toleranzausgleicher, wobei die genannte Schraube durch gegenüberliegende Löcher der Ablagestangen (4), des Fahrzeugdachblechs (3) und eines Verstärkungsträgers (2) des genannten Dachs hindurchgeht, mit äußeren Spannabstützungen auf der entsprechenden Ablagestange und auf dem entsprechenden Verstärkungsträger, und wobei der Toleranzausgleicher zwischen dem Fahrzeugdachblech und dem Verstärkungsträger angebracht ist, mit inneren Spannabstützungen auf denselben, wobei der genannte Toleranzausgleicher eine untere Mutter (6) umfasst, welche auf dem Verstärkungsträger (2) angeordnet ist und mit jedem Loch (9) zur Einführung der Befestigungsschraube (5) übereinstimmt; eine obere Buchse (7), welche im Inneren der Mutter (6) eingeschraubt ist und mit einem oberen äußeren Anschlag (14) für eine Abstützung nach oben, gegen das Fahrzeugdach (3); und Haltemittel der genannten unteren Mutter in dem Verstärkungsträger; **dadurch gekennzeichnet, dass** die Haltemittel der unteren Mutter (6) in dem Verstärkungsträger aus einem Kugelkäfig (8) bestehen, welcher an seinem oberen Bereich an dem Verstärkungsträger befestigt ist und die genannte Mutter umgibt.

2. Verankerung nach Anspruch 1, **dadurch gekennzeichnet, dass** sie auch eine Scheibe (12) aus Kunststoffmaterial umfasst, welche auf der Mutter angebracht ist, zwischen der genannten Mutter und dem Kugelkäfig.

3. Verankerung nach Anspruch 2, **dadurch gekennzeichnet, dass** die Mutter (6) in ihrem oberen Teil, um das Loch zur Einführung der Befestigungsschraube (5) herum, eine periphere Ausnehmung (13) aufweist, in welcher die Scheibe aus Kunststoffmaterial aufgenommen ist, wobei die genannte Ausnehmung eine kleinere Tiefe als die Dicke der Scheibe aufweist.

4. Verankerung nach Anspruch 1, **dadurch gekennzeichnet, dass** die Haltemittel der unteren Mutter (6) in dem Verstärkungsträger (2) aus einer Klemme (37) bestehen, welche an dem genannten Träger montiert ist und mit jedem der Löcher (9) des Verstärkungsträgers der Fahrzeugdachflanken übereinstimmt, wobei die Klemme aus einer Platte aus Kunststoffmaterial besteht welche, von einem ihrer Kanten aus, aus einer Aussparung (23) mit den geeigneten Maßen aufweist, um den Durchgang des Toleranzausgleichers durch dieselbe zu ermöglichen, während von der gegenüberliegenden Kante aus, sich die genannte Platte in eine Zuglasche (26) erstreckt, wobei die genannte Platte Positionierungs- und Verankerungsmittel für den Verstärkungsträger aufweist, in einer transversalen Position und darunter, wobei die Aussparung mit der Kontur eines der Löcher des Verstärkungsträgers übereinstimmt, und aus Mitteln, um den Toleranzausgleicher in Bezug auf das Loch des Verstärkungsträgers zu befestigen und zentrieren, sodass er von dem genannten Träger getrennt ist.

5. Verankerung nach Anspruch 4, **dadurch gekennzeichnet, dass** die vorgenannte Aussparung (23) einen Boden mit einer kreisförmigen Kontur (24) hat, mit einem leicht größeren Durchmesser als das Ende des Toleranzausgleichers, und einen Ausgang (25), dessen Breite kleiner ist als der Durchmesser der genannten kreisförmigen Kontur, wobei von dem Boden des-Ausgangs radiale Zähne (32) radial herausragen, welche, eine leichte nach unten gerichtete Neigung haben, welche eine kleinere kreisförmige Kontur als die Äußere des Toleranzausgleichers begrenzen, und welche als Positionierungs- und Befestigungsmittel des genannten Ausgleichers dienen werden.

6. Verankerung nach Anspruch 4, **dadurch gekennzeichnet, dass** die vorgenannte Platte eine etwa rechteckige Kontur hat, wobei die vorgenannte Aussparung (23) durch eine der kleineren Kanten der genannten Platte endet, wobei von der gegenüberliegenden kleinsten Kante eine Zuglasche (26) herausragt, wobei die Platte, von ihren longitudinalen Kanten und in einer Position, welche an die Zuglasche angrenzt, transversal ausgerichtete seitliche Aussparungen (28) hat.

7. Verankerung nach Anspruch 4, **dadurch gekennzeichnet, dass** die Positionierungs- und Verankerungsmittel der Platte für den Verstärkungsträger aus zwei gebogenen Anschlüssen (29) besteht, welche senkrecht von der Platte herausragen, zwischen den seitlichen Aussparungen (28) und dem Ursprung oder Anfang der vorgenannten Zuglasche, und aus mehreren geraden Anschlüssen (33), welche senkrecht von der Platte herausragen, auf derselben Seite wie die gebogenen Anschlüssen, in einer Position, die mit der kreisförmigen Kante der vorgenannten Aussparung angrenzt, und welche eine äußere Kontur begrenzen, welche etwa denselben Durchmesser wie derjenige der Löcher (9) des Verstärkungsträgers hat; wobei die genannte gebogene Anschlüsse einen Abschnitt (31) haben, der parallel zur Platte ist, die in eine zur Zuglasche gegenüberliegenden Richtung geführt wird.

8. Verankerung nach Anspruch 7, **dadurch gekennzeichnet, dass** die gebogene Anschlüsse (29) eine Z-förmige Kontur aufweisen, mit Endabschnitten (30) " senkrecht zur Platte, einen mittleren Abschnitt (31) parallel zur genannten Platte und einen inneren Abschnitt, mit etwa derselben Höhe wie die Dicke des Verstärkungsträgers (2).

9. Verankerung nach Anspruch 7, **dadurch gekennzeichnet, dass** die gerade Anschlüsse (33) eine größere Höhe als die Dicke des Verstärkungsträgers haben und in einem äußeren Flansch oder Erweiterung (34) enden, welcher/welche von dem genannten Verstärkungsträger herausragt.

10. Verankerung nach Anspruch 4, **dadurch gekennzeichnet, dass** von der oberen Fläche der Platte, um die Aussparung herum, mehrere Trennzapfen (36) für die Abstützung des Verstärkungsträgers herausragen.

11. Verankerung nach Anspruch 4, **dadurch gekennzeichnet, dass** von dem Boden der Aussparung aus, die Platte mit zwei durchgängigen Schnittlinien (35) versehen ist, welche sich zur Zuglasche richten.

12. Verankerung nach Anspruch 4 oder 6, **dadurch gekennzeichnet, dass** die Zuglasche (26) mit der oberen Fläche der Platte einen Winkel bildet, der größer als 180° ist.

## Revendications

1. Pièce d'ancrage pour monter des galeries sur des toits de véhicule, comprenant une vis de fixation (5) et un compensateur de tolérance, ladite vis qui passe à travers des trous opposés des barres de galerie (4), du panneau de toit du véhicule (3) et d'une poutre de renfort (2) dudit toit, avec des supports extérieurs de serrage sur la barre de galerie correspondante et la poutre de renfort, et dont le compensateur de tolérance est placé entre le panneau de toit et la poutre de renfort, avec les supports extérieurs de serrage sur celles-ci, le compensateur de tolérance précité comprend un écrou inférieur (6) disposé sur la poutre de renfort (2), coïncidant avec chaque trou (9) pour insérer la vis de fixation (5) ; une douille supérieure (7) vissée à l'intérieur de l'écrou (6) et avec une butée extérieure supérieure (14) pour le support vers le haut, contre le toit du véhicule (6) ; et des moyens de retenue dudit écrou dans la poutre de renfort, **caractérisée en ce que** les moyens de retenue de l'écrou inférieur (6) dans la poutre de renfort consistent en une cage à billes (8) qui est fixée par sa partie supérieure à la poutre de renfort et encercle ledit écrou.

2. Pièce d'ancrage selon la revendication 1, **caractérisée en ce qu'**il comprend une rondelle en matière plastique (12) placée sur l'écrou, entre ledit écrou et la cage à billes.

3. Pièce d'ancrage selon la revendication 2, **caractérisée en ce que** l'écrou (6) a dans sa partie supérieure, autour du trou pour insérer la vis de fixation (5), un évidement périphérique (13) dans lequel est logée la rondelle en matière plastique, cet évidement ayant une profondeur inférieure à l'épaisseur de la rondelle.

4. Pièce d'ancrage selon la revendication 1, **caractérisée en ce que** le moyen de retenue de l'écrou inférieur (6) dans la poutre de renfort (2) consiste en une attache (37) qui est montée sur ladite poutre, coïncidant avec chacun des trous (9) de poutre de renfort des flancs du toit de véhicule, attache qui est constituée par une plaque en matière plastique présentant, à partir d'un de ses bords, une entaille (23) avec les dimensions appropriées pour permettre que le compensateur de tolérance passe à travers elle, tandis à partir du bord opposé, ladite plaque s'étend dans un onglet (26), ladite plaque ayant des moyens de positionnement et d'ancrage sur la poutre de renfort, dans une position transversale et sous ceux-ci, l'entaille coïncidant avec le contour d'un des trous de poutre de renfort, et des moyens pour attacher et centrer le compensateur de tolérance par rapport au trou de poutre de renfort, de manière à se séparer de ladite poutre.

5. Pièce d'ancrage selon la revendication 4, **caractérisée en ce que** l'entaille (23) précitée a un fond avec un contour circulaire (24), avec un diamètre légèrement supérieur à l'extrémité du compensateur de tolérance, et une sortie (25) dont la largeur est inférieure au diamètre dudit contour circulaire, faisant saillie sur les dents radiales inférieures de sortie (32), en ayant une légère inclination vers le bas, qui délimitent un contour circulaire inférieur à celui extérieur du compensateur de tolérance, et qui serviront comme moyens de positionnement et d'attachement dudit compensateur.

6. Pièce d'ancrage selon la revendication 4, **caractérisée en ce que** la plaque précitée a un contour approximativement rectangulaire, ladite entaille (23) terminant à travers un des bords inférieurs de ladite plaque, tandis que à partir du bord opposé plus petit fait saillie un onglet (26), la plaque ayant, à partir de ses bords longitudinaux et dans une position attenante à l'onglet, des entailles latérales alignées transversalement (28).

7. Pièce d'ancrage selon la revendication 4, **caractérisée en ce que** les moyens de positionnement et d'ancrage de la plaque à la poutre de renfort consistent en deux broches courbées (29), qui font saillie perpendiculairement sur là plaque, entre les entailles latérales (28) et la racine ou début dudit onglet, et dans une série de broches droites (33) faisant saillie perpendiculairement sur la plaque, du même côté que les broches courbées, dans une position attenante au bord circulaire de ladite entaille, et qui délimitent un contour extérieur qui a un diamètre approximativement identique à celui des trous (9) de poutre de renfort; lesdites broches courbées ayant une section (31) parallèle à la plaque, qui est guidée vers une direction opposée à l'onglet.

8. Pièce d'ancrage selon la revendication 7, **caractérisée en ce que** les broches courbées (29) ont un contour sous forme de Z, avec des sections d'extrémité (30) perpendiculaires à la plaque, une section intermédiaire (31) parallèle à ladite plaque, et une section interne qui a approximativement la même hauteur que l'épaisseur de ladite poutre (2).

9. Pièce d'ancrage selon la revendication 7, **caractérisée en ce que** les broches droites (29) ont une hauteur supérieure à l'épaisseur de la poutre de renfort et termineront dans un rebord extérieur ou évasement (34) faisant saillie sur ladite poutre de renfort.

10. Pièce d'ancrage selon la revendication 4, **caractérisée en ce qu'**à partir de la surface supérieure de la plaque, fait saillie, autour de l'entaille, une série de pivots de séparation (36), pour le support de la poutre de renfort.

11. Pièce d'ancrage selon la revendication 4, **caractérisée en ce que** la plaque es pourvue, à partir du fond de l'entaille, de deux lignes de découpe passantes (35), dirigées vers l'onglet.

12. Pièce d'ancrage selon les revendications 4 ou 6, **caractérisée en ce que** l'onglet (26) forme un angle supérieur à 180° par rapport à la surface supérieure de la plaque.
